# EUROPEAN PATENT SPECIFICATION

(11) **EP 3 916 124 B1**
(45) Date of publication and mention of the grant of the patent: **05.06.2024**
(21) Application number: 20744636.0
(22) Date of filing: 23.01.2020
(51) Int. Cl.: C09D 5/14, C09D 133/26, C23C 2/06, C23C 2/12, C23C 2/26, C23C 28/00, C08F 220/06, C08F 220/54, C08F 220/56, C08F 226/02, C09D 133/06, C09D 139/00

(54) **METAL SURFACE TREATMENT AGENT, AND METAL MATERIAL HAVING FILM AND MANUFACTURING METHOD THEREFOR**
BEHANDLUNGSMITTEL FÜR METALLOBERFLÄCHEN UND METALLMATERIAL MIT EINEM FILM SOWIE HERSTELLUNGSVERFAHREN DAFÜR
AGENT DE TRAITEMENT DE SURFACE MÉTALLIQUE, ET MATÉRIAU MÉTALLIQUE AYANT UN FILM ET PROCÉDÉ DE FABRICATION ASSOCIÉ

(30) Priority: 24.01.2019 JP 2019010529
(43) Date of publication of application: 01.12.2021
(73) Proprietor: Nihon Parkerizing Co., Ltd., Tokyo 103-0027 (JP)
(72) Inventor: TOKUE, Masaru, Tokyo 103-0027 (JP); SUZUKI, Ryosuke, Tokyo 103-0027 (JP); MOCHIZUKI, Taro, Tokyo 103-0027 (JP); SAKUMOTO, Mai, Tokyo 103-0027 (JP)
(74) Representative: Jones, Nicholas Andrew
(86) International application number: PCT/JP2020/002236
(87) International publication number: WO 2020/153416

(56) References cited:
- EP-A1- 1 136 591
- WO-A1-00/22188
- WO-A1-2011/148160
- CN-A- 101 870 851
- CN-A- 103 381 130
- JP-A- H07 187 936
- JP-A- 2000 516 996
- JP-A- 2005 336 550
- US-A1- 2010 240 563
- US-A1- 2013 029 165
- US-A1- 2018 028 431

## Description

### TECHNICAL FIELD

The present invention relates to: a metal surface treatment agent; a method of producing a metal material having a film using the metal surface treatment agent; and a metal material having a film, which is obtained by the method.

### BACKGROUND ART

Technologies relating to a film having antimicrobial performance have been developed. For example, Patent Document 1 discloses a hydrophilic film formed by using a hydrophilization treatment agent for a heat exchanger, which contains a water-dispersible silica, an aqueous polyurethane resin, and an aqueous blocked urethane prepolymer. Patent Document 2 discloses a film that is formed by a hydrophilization treatment agent containing a chitosan derivative in which some or all of primary amino groups of chitosan are added by a compound having an unsaturated group between carbon atoms at the *α*-position of its electron-withdrawing group.

### RELATED ART DOCUMENTS

### PATENT DOCUMENTS

[Patent Document 1] Japanese Unexamined Patent Application Publication No. H8-60031
[Patent Document 2] Japanese Unexamined Patent Application Publication No. 2010-185024

### SUMMARY OF THE INVENTION

### PROBLEMS TO BE SOLVED BY THE INVENTION

An object of the present invention is to provide: a novel metal surface treatment agent which can form a film capable of maintaining antimicrobial performance on or over a surface of a metal material; a method of producing a metal material having a film using the metal surface treatment agent; and a metal material having a film, which is obtained by the method.

### MEANS FOR SOLVING THE PROBLEMS

The present inventors intensively studied to solve the above-described problems and consequently discovered that a film capable of maintaining antimicrobial performance can be formed on or over a surface of a metal material by combining specific resins, thereby completing the present invention.

That is, the present invention encompasses the followings.
[1] A metal surface treatment agent, containing:
   a copolymer (A) obtained by polymerizing a compound (a) represented by the following Formula (1) with a compound (b) represented by the following Formula (2) or (3); and
   a water-soluble or water-dispersible resin (B),
   wherein
   a polymerization ratio [a_{M}:b_{M}] between the molar amount (a_{M}) of the compound (a) and the molar amount (b_{M}) of the compound (b) is in a range of 90:10 to 20:80,
   the copolymer (A) has a weight-average molecular weight of 50,000 or higher, and
   the resin (B) is one or more selected from urethane resins, polyvinyl alcohol resins, polyamide resins, epoxy resins, phenolic resins, and polyvinylpyrrolidone resins: 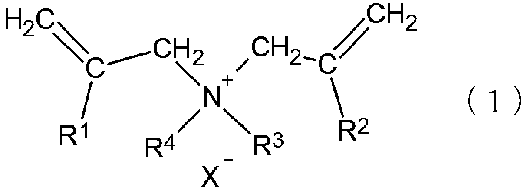 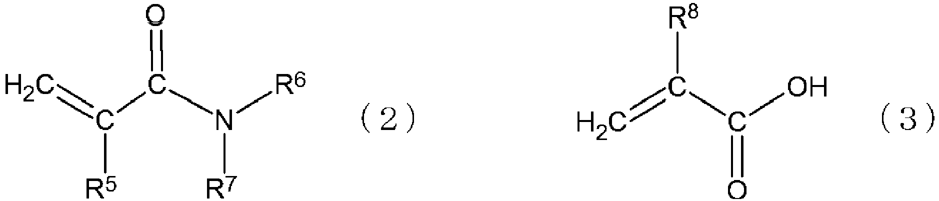
   in Formula (1), R¹ and R² each independently represent a hydrogen atom or an alkyl group having 1 to 4 carbon atoms, R³ and R⁴ each independently represent an alkyl group having 1 to 5 carbon atoms, and X⁻ represents an ion of a halogen atom, or an acid anion;
   in Formula (2), R⁵ represents a hydrogen atom or a methyl group, R⁶ and R⁷ each independently represent a hydrogen atom, an alkyl group having 1 to 4 carbon atoms, a benzyl group, or a hydroxyalkyl group having 2 or 3 carbon atoms; and
   in Formula (3), R⁸ represents a hydrogen atom or a methyl group.
[2] The metal surface treatment agent according to [1], wherein a ratio [A_{W}/B_{W}] between the mass (A_{W}) of the copolymer (A) and the mass (B_{W}) of the resin (B) is in a range of 0.05 to 1.0.
[3] The metal surface treatment agent according to any one of [1] to [2], further containing a crosslinking component (C).
[4] The metal surface treatment agent according to [3], wherein the crosslinking component (C) is a carboxyl group-containing compound (excluding the copolymer (A)) and/or a water-soluble metal compound.
[5] The metal surface treatment agent according to [3] or [4], wherein a ratio [C_{W}/(A_{W} + B_{W})] between the mass (Cw) of the crosslinking component (C) and a total of the mass (A_{W}) and the mass (B_{W}) is in a range of 0.03 to 0.43.
[6] A method of producing a metal material having a film, the method including the steps of:
   contacting the metal surface treatment agent according to any one of [1] to [5] on or over a surface of a metal material; and
   drying the metal surface treatment agent thus contacted.
[7] A metal material having a film, which is obtained by the method according to [6].

### EFFECTS OF THE INVENTION

According to the present invention, the followings can be provided: a novel metal surface treatment agent which can form a film capable of maintaining antimicrobial performance on or over a surface of a metal material; a method of producing a metal material having a film using the metal surface treatment agent; and a metal material having a film, which is obtained by the method.

### MODE FOR CARRYING OUT THE INVENTION

The metal surface treatment agent according to the present embodiment, a method of producing a metal material having a film using the metal surface treatment agent, and a metal material having a film, which is obtained by the method, will now be described.

### (Metal Surface Treatment Agent)

The metal surface treatment agent according to the present embodiment contains a specific copolymer (A) and a water-soluble or water-dispersible resin (B). By using this metal surface treatment agent, a film capable of maintaining antimicrobial performance can be formed on or over a surface of a metal material.

### <Copolymer (A)>

The copolymer (A) is not particularly restricted as long as it is obtained by polymerizing a compound (a) represented by the above-described Formula (1) (hereinafter, simply referred to as "compound (a)") with a compound (b) represented by the above-described Formula (2) or (3) (hereinafter, simply referred to as "compound (b)"), and the copolymer (A) may be any of an alternating copolymer, a random copolymer, a block copolymer, and a graft copolymer. These copolymers can be produced by a known polymerization method. In the production of the copolymer (A), the ratio between the molar amount (a_{M}) of the compound (a) and the molar amount (b_{M}) of the compound (b) is in a range of 90:10 to 20:80, and it is preferably in a range of 80:20 to 40:60, more preferably in a range of 70:30 to 60:40.

The weight-average molecular weight of the copolymer (A) is not particularly restricted as long as it is 50,000 or higher; however, it is preferably 100,000 or higher, more preferably 500,000 or higher. An upper limit value is preferably 2,000,000 or less. The weight-average molecular weight can be determined by a gel-permeation chromatography (GPC) analysis. In the gel-permeation chromatography analysis, polyethylene glycol is used as a standard polymer.

R¹ to R⁴ and X⁻ in Formula (1), R⁵ to R⁷ in Formula (2), and R⁸ in Formula (3) are as follows. R¹ and R² each independently represent a hydrogen atom or an alkyl group having 1 to 4 carbon atoms. R³ and R⁴ each independently represent an alkyl group having 1 to 5 carbon atoms. X⁻ represents an ion of a halogen atom, or an acid anion. R⁵ represents a hydrogen atom or a methyl group. R⁶ and R⁷ each independently represent a hydrogen atom, an alkyl group having 1 to 4 carbon atoms, a benzyl group, or a hydroxyalkyl group having 2 or 3 carbon atoms. R⁸ represents a hydrogen atom or a methyl group. It is noted here that the above-described alkyl groups may be linear or branched. The halogen atom is, for example, a fluorine atom, a chlorine atom, a bromine atom, or an iodine atom. The acid anion is, for example, a carboxylate anion such as CH₃COO⁻. Examples of the hydroxyalkyl group include a 1-hydroxyethyl group, a 2-hydroxyethyl group, a 1-hydroxypropyl group, a 2-hydroxypropyl group, a 3-hydroxypropyl group, and a 2-hydroxy-1-methylethyl group.

### <Water-Soluble or Water-Dispersible Resin (B)>

The water-soluble or water-dispersible resin (B) (hereinafter, simply referred to as "resin (B)") is one or more selected from a urethane resin, a polyvinyl alcohol resin, a polyamide resin, an epoxy resin, a phenolic resin, or a polyvinylpyrrolidone resin. The resin (B) may be a homopolymer of a urethane resin, a polyvinyl alcohol resin, a polyamide resin, an epoxy resin, a phenolic resin, a polyvinylpyrrolidone resin or the like; a modification product obtained by modifying a side chain of the homopolymer with other compound; or a copolymer of a combination of two or more of the above-described resins and modification product. These resins may be used singly, or in combination of two or more thereof.

In the metal surface treatment agent according to the present embodiment, the content ratio of the copolymer (A) and the resin (B) is not particularly restricted; however, a ratio [A_{W}/B_{W}] between the mass (A_{W}) of the copolymer (A) and the mass (B_{W}) of the resin (B) is preferably in a range of 0.05 to 1.00, more preferably in a range of 0.10 to 0.90, particularly preferably in a range of 0.20 to 0.80.

### <Other Components>

The metal surface treatment agent according to the present embodiment may consist of only the copolymer (A) and the resin (B) in addition to an aqueous medium, or may further contain other component(s). Examples of the other components include a crosslinking component (C) and a surfactant.

The crosslinking component (C) is not particularly restricted as long as it is different from the copolymer (A) and the resin (B) and links the resin (B), and the crosslinking component (C) may be, for example, a carboxyl group-containing compound or a water-soluble metal compound. Examples of the carboxyl group-containing compound include citric acid, 1,2,3,4-butanetetracarboxylic acid, tartaric acid, and malic acid. The term "water-soluble" used for the water-soluble metal compound means that 1 g of the metal compound can be dissolved in 1 L of water at 25°C. The water-soluble metal compound is not particularly restricted as long as it is soluble in water, and examples thereof include: organic titanium compounds, such as diisopropoxy titanium bis(triethanolaminate) titanium; chromium-containing compounds, such as chromium (III) sulfate and chromium (III) nitrate; inorganic zirconium-containing compounds, such as hexafluorozirconic acid; and inorganic titanium-containing compounds, such as hexafluorotitanic acid. The term "organic titanium compound" used herein means a titanium-containing compound having an organic group.

When the metal surface treatment agent according to the present embodiment further contains the crosslinking component (C), the content ratio of the copolymer (A), the resin (B), and the crosslinking component (C) is not particularly restricted; however, a ratio [Cw/(Aw + B_{W})] between the mass (Cw) of the crosslinking component (C) and a total of the mass (A_{W}) of the copolymer (A) and the mass (B_{W}) of the resin (B) is preferably in a range of 0.03 to 0.43, more preferably in a range of 0.1 to 0.3.

As the surfactant, a cationic, anionic, amphoteric, or nonionic surfactant can be used, and examples thereof include: cationic surfactants, such as alkylamine salts and alkyltrimethyl ammonium halides; anionic surfactants, such as alkyl sulfonates, polyoxyethylene alkylphenyl ether sulfates, sodium dodecyldiphenyl ether disulfonate, and sodium dodecyl sulfate; amphoteric surfactants, such as alkyl aminopropionates and alkyldimethyl betaines; and nonionic surfactants, such as polyoxyethylene alkylphenyl ethers, polyoxyalkylene fatty acid esters, fatty acid glycerin esters, sorbitan fatty acid esters, polyoxyethylene glycerin fatty acids, and polyoxyethylene propylene glycol fatty acid esters. These surfactants may be used singly, or in combination of two or more thereof.

### <Aqueous Medium>

The aqueous medium is not particularly restricted as long as it contains water in an amount of not less than 50% by mass, and the aqueous medium may consist of only water, or may be a mixture containing water and a water-miscible organic solvent. The water-miscible organic solvent is not particularly restricted as long as it is miscible with water, and examples thereof include: ketone-based solvents, such as acetone and methyl ethyl ketone; amide-based solvents, such as *N,N*'-dimethylformamide and dimethylacetamide; alcohol-based solvents, such as methanol, ethanol, and isopropanol; ether-based solvents, such as ethylene glycol monobutyl ether and ethylene glycol monohexyl ether; and pyrrolidone-based solvents, such as 1-methyl-2-pyrrolidone and 1-ethyl-2-pyrrolidone.

These water-miscible organic solvents may be mixed with water singly, or two or more thereof may be mixed with water.

### (Method of Producing Metal Surface Treatment Agent)

The metal surface treatment agent according to the present embodiment can be produced by, for example, mixing prescribed amounts of the copolymer (A), the resin (B) and, as required, other component(s) in an aqueous medium.

### (Metal Material Having Film and Production Method Thereof)

The method of producing a metal material having a film according to the present embodiment (hereinafter, simply referred to as "the production method according to the present embodiment") includes: the contact step of contacting the above-described metal surface treatment agent on or over a surface of a metal material; and the drying step of drying the metal surface treatment agent thus contacted. By this production method, a metal material which has a film capable of maintaining antimicrobial performance on or over the surface can be obtained. In the production method according to the present embodiment, the degreasing step and/or the chemical conversion treatment step may be performed before the contact step.

### <Metal Material>

The shape, the structure and the like of the metal material on which a film is to be formed are not particularly restricted, and the metal material may be in the form of, for example, a plate or a foil. The type of the metal material is also not particularly restricted, and examples thereof include: steel materials (e.g., cold-rolled steel sheets, hot-rolled steel sheets, mill scale materials, pickled steel sheets, high tensile steel sheets, tool steels, alloy tool steels, spheroidal graphite cast irons, and gray cast irons); plated materials, such as zinc-plated materials (e.g., electrogalvanized materials, hot-dip galvanized materials, aluminum-containing galvanized materials, electrogalvanized materials, zinc-nickel plated materials, zinc-cobalt plated materials, and zinc vapor-deposited materials), zinc alloy-plated materials (e.g., alloyed molten zinc-plated materials, Zn-Al alloy-plated materials, Zn-Al-Mg alloy-plated materials, and zinc alloy-electroplated materials), aluminum-plated materials, nickel-plated materials, tin-plated materials, chromium-plated materials, and chromium alloy-plated materials (e.g., Cr-Ni alloy-plated materials); aluminum materials and aluminum alloy materials (e.g., 1,000 series, 2,000 series, 3,000 series, 4,000 series, 5,000 series, 6,000 series, aluminum casts, aluminum alloy casts, and die-cast materials); copper materials and copper alloy materials; titanium materials and titanium alloy materials; and magnesium materials and magnesium alloy materials.

### <Contact Step>

Examples of a contact method include, but not limited to: a spray method, an immersion method, a roll coating method, a bar coating method, a curtain coating method, a spin coating method, and a combination of these methods. The contact temperature and the contact time are set as appropriate in accordance with the formulation and the concentration of the metal surface treatment agent; however, usually, the contact temperature is in a range of 0°C to 50°C, and the contact time is in a range of 1 second to 300 seconds.

### <Drying Step>

A drying method is not particularly restricted, and examples thereof include drying methods using a known drying equipment, such as a batch-type drying furnace, a continuous hot air circulation-type drying furnace, a conveyer-type hot-air drying furnace, and an electromagnetic induction heating furnace using an IH heater. The drying temperature and the drying time are set as appropriate in accordance with the type of the metal material and the formulation or the amount of the metal surface treatment agent brought into contact with the metal material; however, usually, the drying temperature is in a range of 120°C to 200°C, and the drying time is in a range of 2 seconds to 1,800 seconds.

### <Degreasing Step>

As a degreasing method, any method may be employed as long as oils/fats and dirt can be removed, and examples thereof include solvent degreasing and known methods using an alkali-based or acid-based degreasing agent or the like. In cases where the contact step or the chemical conversion treatment step is performed after the degreasing step, the water washing step may or may not be performed on or over the surface of the metal material after the degreasing step but before the contact step or the chemical conversion treatment step. When the water washing step is performed, drying may or may not be subsequently performed on or over the surface of the metal material.

### <Chemical Conversion Treatment Step>

The chemical conversion treatment step is not particularly restricted as long as it is a treatment of forming a chemical conversion coating, and examples thereof include the zirconium chemical conversion treatment step, the titanium chemical conversion treatment step, the hafnium chemical conversion treatment step, the phosphate chemical conversion treatment step, and the chromate chemical conversion treatment step. The water washing step may or may not be performed on or over the surface of the metal material after the chemical conversion treatment step but before the contact step. When the water washing step is performed, drying may or may not be subsequently performed on or over the surface of the metal material. In cases where the phosphate chemical conversion treatment step using zinc phosphate is performed as the chemical conversion treatment step, the surface-adjusting treatment step may be performed on the metal material between the degreasing step and the phosphate chemical conversion treatment step for the purpose of improving the reactivity. Any known method can be employed as a surface-adjusting treatment method of this step.

### <Chemical Conversion Agent>

The chemical conversion treatment step is performed by bringing a chemical conversion agent into contact with or over the surface of the metal material. Examples of the chemical conversion agent include, but not limited to: zirconium chemical conversion agents, titanium chemical conversion agents, hafnium chemical conversion agents, phosphate chemical conversion agents, and chromate chemical conversion agents. Examples of a method of bringing the chemical conversion agent into contact include, but not limited to: known contact methods such as an immersion treatment method, a spray treatment method, a pouring method, and a combination of these methods. In the above-described various chemical conversion treatment steps, the temperature and the contact time of the chemical conversion agent can be set as appropriate in accordance with the type of the chemical conversion treatment step and the concentration and the like of the chemical conversion agent.

### <Film>

The thickness of the film formed by the metal surface treatment agent on or over the surface of the metal material is not particularly restricted as long as the performance of the present invention can be exerted, and the thickness of the film is, for example, preferably in a range of 0.1 µm to 2.0 µm, more preferably in a range of 0.3 µm to 1.5 µm.

### EXAMPLES

The present invention will now be described in more detail by way of Examples and Comparative Examples. It is noted here, however, that the present invention is not restricted to the below-described Examples.

### (Preparation of Metal Surface Treatment Agents)

The formulations of the metal surface treatment agents of Examples 01 to 07 and Comparative Examples 01 to 05 are shown in Table 1. The details of the symbols shown in Table 1 under the columns of "Polymer", "Resin (B)" and "Crosslinking component (C)" are provided in Tables 2 to 4. The metal surface treatment agents were each prepared by mixing the respective components in water. The solid content in each metal surface treatment agent was adjusted to be 4%. The production method of each polymer will be described below.

**[Table 1]**

| Table 1 Formulations of Metal Surface Treatment Agents of Examples and Comparative Examples | | | | | |
|---|---|---|---|---|---|
| Example / Comparative Exampke | Component | | | Mass of polymer/Bw | Cw/(Mass of polymer + Bw) |
| | Polymer | Resin(B) | Crosslinking component (C) | | |
| Example 01 | A1 | B1 | - | 0.4 | - |
| Example 02 | A3 | B1 | - | 0.03 | - |
| Example 03 | A4 | B3 | - | 1.2 | - |
| Example 04 | A1 | B2 | C3 | 0.5 | 0.1 |
| Example 05 | A2 | B1 | C2 | 0.5 | 0.2 |
| Example 06 | A5 | B2 | C1 | 0.4 | 0.02 |
| Example 07 | A6 | B3 | C1 | 0.6 | 0.5 |
| Comparative Example 01 | A3 | - | - | - | - |
| Comparative Example 02 | - | B1 | - | - | - |
| Comparative Example 03 | D1 | B3 | - | 0.6 | - |
| Comparative Example 04 | D2 | B2 | - | 0.4 | - |
| Comparative Example 05 | D3 | B3 | - | 0.8 | - |

**[Table 2]**

| Table 2 Type of polymer | | | | | | | | | | | |
|---|---|---|---|---|---|---|---|---|---|---|---|
| | Compound (a) | | | | | Compound (b) | | | | Molar ratio Compound(a):Compound(b) | Weight-average molecular weight |
| | R¹ | R² | R³ | R⁴ | X | R⁵ | R⁶ | R⁷ | R⁸ | | |
| A1 | H | H | CH₃ | CH₃ | Cl | H | H | H | - | 50:50 | 500,000 |
| A2 | H | H | CH₃ | CH₃ | Cl | - | - | - | H | 20:80 | 250,000 |
| A3 | CH₃ | H | H | H | Cl | H | CH₃ | H | - | 60:40 | 50,000 |
| A4 | CH₃ | CH₃ | H | H | Cl | CH₃ | CH₃ | H | - | 90:10 | 200,000 |
| A5 | CH₃ | H | CH₃ | CH₃ | Cl | - | - | - | CH₃ | 70:30 | 200,000 |
| A6 | CH₃ | CH₃ | CH₃ | CH₃ | OH | H | H | H | - | 60:40 | 150,000 |
| D1 | H | H | CH₃ | CH₃ | Cl | - | - | - | - | 100:0 | 500,000 |
| D2 | H | H | CH₃ | CH₃ | Cl | H | H | H | - | 10:90 | 500,000 |
| D3 | H | H | CH₃ | CH₃ | Cl | H | H | H | - | 80:20 | 22,000 |

**[Table 3]**

| Table 3 Type of water-soluble or water-dispersible resin (B) | | | |
|---|---|---|---|
| No. | Type | Manufacturer | Product name |
| B1 | Urethane resin | DSK Co., Ltd. | SUPERFLEX E-2000 |
| B2 | Polyvinyl alcohol | Kuraray Co., Ltd. | KURARAY POVAL PVA-103 |
| B3 | Modified polyamide resin | Toray Industries, Inc. | AQ NYLON T-70 |

**[Table 4]**

| Table 4 Type of crosslinking component (C) | | | |
|---|---|---|---|
| No. | Type | Manufacturer | Product name |
| C1 | Organic titanium | Matsumoto Fine Chemical Co., Ltd. | ORGATIX TC-400 |
| C2 | 1,2,3,4-butanetetracarboxylic acid | New Japan Chemical Co., Ltd. | RIKACID BT-W |
| C3 | Chromium (III) sulfate | Nippon Chemical Industrial Co., Ltd. | 35% chromium sulfate |

| | | | |
|---|---|---|---|
| Organic titanium: diisopropoxy titanium bis(triethanolaminate) titanium | | | |

### (Production of Polymers)

### Production of Polymer A1

First, 201 g of an aqueous solution of the compound (a) (60%), 53 g of the compound (b) and 580 g of water were mixed and heated to 70°C in nitrogen gas. Next, 15 g of an aqueous ammonium persulfate solution (20%) was added and allowed to react at 70°C for 15 hours, after which the reaction was quenched by cooling, whereby a polymer A1 was produced.

### Production of Polymer A2

After mixing 81 g of an aqueous solution of the compound (a) (60%) with 30 g of water and stirring the resulting mixture to uniformly dissolve the compound (a), the mixture was heated to 70°C, and 6 g of an aqueous ammonium persulfate solution (20%) was added thereto with stirring. After the start of heat generation, an aqueous solution obtained by mixing 108 g of an aqueous solution of the compound (b) (80%) with 108 g of water was added dropwise to the mixture while maintaining the temperature at 70 to 80°C. After the completion of the dropwise addition, the resultant was allowed to react for 2 hours. Subsequently, 70 g of water was added, and the resultant was stirred and then cooled to quench the reaction. Thereafter, an aqueous sodium hydroxide solution (20%) was added to adjust the pH to 4.8, whereby a polymer A2 was produced.

### Production of Polymer A3

First, 221 g of an aqueous solution of the compound (a) (60%), 51 g of the compound (b) and 322 g of water were mixed and heated to 70°C in nitrogen gas. Next, 15 g of an aqueous ammonium persulfate solution (20%) was added and allowed to react at 70°C for 7 hours, after which the reaction was quenched by cooling, whereby a polymer A3 was produced.

### Production of Polymer A4

First, 362 g of an aqueous solution of the compound (a) (60%), 15 g of the compound (b) and 774 g of water were mixed and heated to 70°C in nitrogen gas. Next, 15 g of an aqueous ammonium persulfate solution (20%) was added and allowed to react at 70°C for 10 hours, after which the reaction was quenched by cooling, whereby a polymer A4 was produced.

### Production of Polymer A5

After mixing 306 g of an aqueous solution of the compound (a) (60%) with 300 g of water and stirring the resulting mixture to uniformly dissolve the compound (a), the mixture was heated to 70°C, and 6 g of an aqueous ammonium persulfate solution (20%) was added thereto with stirring. After the start of heat generation, an aqueous solution obtained by mixing 48 g of an aqueous solution of the compound (b) (80%) with 150 g of water was added dropwise to the mixture while maintaining the temperature at 70 to 80°C. After the completion of the dropwise addition, the resultant was allowed to react for 2 hours. Subsequently, 150 g of water was added, and the resultant was stirred and then cooled to quench the reaction. Thereafter, an aqueous sodium hydroxide solution (20%) was added to adjust the pH to 4.8, whereby a polymer A5 was produced.

### Production of Polymer A6

First, 308 g of an aqueous solution of the compound (a) (60%), 51 g of the compound (b) and 786 g of water were mixed and heated to 70°C in nitrogen gas. Next, 15 g of an aqueous ammonium persulfate solution (20%) was added and allowed to react at 70°C for 10 hours, after which the reaction was quenched by cooling, whereby a polymer A6 was produced.

### Production of Polymer D2

First, 161 g of an aqueous solution of the compound (a) (60%), 383 g of the compound (b) and 960 g of water were mixed and heated to 70°C in nitrogen gas. Next, 15 g of an aqueous ammonium persulfate solution (20%) was added and allowed to react at 70°C for 6 hours, after which the reaction was quenched by cooling, whereby a polymer D2 was produced.

### Production of Polymer D3

First, 56 g of an aqueous solution of the compound (a) (60%), 4 g of the compound (b) and 124 g of water were mixed and heated to 70°C in nitrogen gas. Next, 15 g of an aqueous ammonium persulfate solution (20%) was added and allowed to react at 70°C for 5 hours, after which the reaction was quenched by cooling, whereby a polymer D3 was produced.

### Measurement of Weight-Average Molecular Weight of Polymers

For each of the thus obtained polymers A1 to A6, D2 and D3, the weight-average molecular weight was determined by gel-permeation chromatography (GPC) analysis. The results thereof are shown in Table 2.

### (Preparation of Evaluation Samples)

As test materials, an aluminum sheet (A1050P manufactured by Paltec Co., Ltd., size: 40 mm × 40 mm, thickness: 0.8 mm) (M1) and a hot-dip galvanized steel sheet [amount of adhered zinc per side: 50 g/m² (galvanized on both sides), size: 40 mm × 40 mm, thickness: 0.6 mm] (M2) were used.

The test materials were each immersed in an alkali-based degreasing agent [FINE CLEANER 315E (manufactured by Nihon Parkerizing Co., Ltd.) dissolved in water at a mass concentration of 2%] at 60°C for 2 minutes to perform a degreasing treatment. Subsequently, the surface of each test material was washed with water.

The test materials, which had been thus degreased and washed with water, were each immersed in a zirconium-based chemical conversion agent [PALCOAT 3790M (manufactured by Nihon Parkerizing Co., Ltd.) dissolved in water at a mass concentration of 20% and adjusted to have a pH of 3.7] at 60°C for 2 minutes to perform a chemical conversion treatment. After the chemical conversion treatment, the surface of each test material was washed with water.

The test materials, on which a chemical conversion film had been formed by the chemical conversion treatment, were immersed in the respective metal surface treatment agents at 20°C for 15 seconds and subsequently heat-dried at 150°C for 6 minutes using a blow dryer, whereby test materials having a film (evaluation samples No. 1 to 12) were produced.

### (Method of Evaluating Antimicrobial Performance)

For the thus obtained evaluation samples No. 1 to 12, the antimicrobial performance (initial) was evaluated in accordance with the evaluation method prescribed in ISO 22196:2011 (film adhesion method). As bacteria, *Staphylococcus aureus* and *Escherichia coli* were used. The antimicrobial performance was evaluated based on the following antimicrobial performance evaluation criteria in terms of the reduction rate of subject bacteria (%) that was calculated using an equation [Reduction rate of subject bacteria (%) = 100 - Y/Z × 100]. In this equation, Y means the number of colonies formed by culturing the bacteria along with an evaluation sample, and Z means the number of colonies formed by culturing the bacteria without an evaluation sample.

Further, for the evaluation samples No. 1 to 12 which had been immersed in deionized water for 96 hours and then dried naturally, the antimicrobial performance (persistence) was evaluated in the same manner. The results thereof are shown in Table 5.

### <Antimicrobial Performance Evaluation Criteria>

⊚ (with antimicrobial performance): reduction rate of subject bacteria = 99.9% or higher
∘ (with antimicrobial performance): reduction rate of subject bacteria = 99.0% or higher but lower than 99.9%
× (insufficient antimicrobial performance): reduction rate of subject bacteria = lower than 99.0%

### (Method of Evaluating Fungus Resistance)

For the evaluation samples No. 1 to 12, the fungus resistance (initial) was evaluated in accordance with the evaluation method prescribed in ISO 846:1997 Method A. As fungi, a mixed spore suspension (a mixture of five species of fungi: *Aspergillus niger, Penicillium pinophilum, Chaetomium globosum, Trichoderma,* and *Paecilomyces variotii)* was used.

The fungus resistance was evaluated based on the following fungus resistance evaluation criteria using the hyphal growth state as an index.

Further, for the evaluation samples No. 1 to 12 which had been immersed in deionized water for 96 hours and then dried naturally, the fungus resistance (persistence) was evaluated in the same manner. The results thereof are shown in Table 5.

### <Fungus Resistance Evaluation Criteria>

⊚ (with fungus resistance): Fungal growth was not observed with the naked eye or under a microscope.
∘ (with fungus resistance): Fungal growth was not observed with the naked eye; however, it was clearly confirmed under a microscope.
× (insufficient fungus resistance): Fungal growth was observed with the naked eye.

**[Table 5]**

| Table 5 Evaluation results | | | | | | |
|---|---|---|---|---|---|---|
| Evaluation sample | Material | Metal surface treatment agent | Antimicrobial performance | | Fungus resistance | |
| | | | Initial | Persistence | Initial | Persistence |
| No. 1 | M1 | Example 01 | ⊚ | ○ | ⊚ | ○ |
| No. 2 | M1 | Example 02 | ○ | ○ | ○ | ○ |
| No. 3 | M1 | Example 03 | ⊚ | ○ | ○ | ○ |
| No. 4 | M1 | Example 04 | ⊚ | ⊚ | ⊚ | ⊚ |
| No. 5 | M2 | Example 05 | ⊚ | ⊚ | ⊚ | ⊚ |
| No. 6 | M1 | Example 06 | ⊚ | ○ | ⊚ | ○ |
| No. 7 | M1 | Example 07 | ⊚ | ○ | ⊚ | ○ |
| No. 8 | M1 | Comparative Example 01 | × | × | × | × |
| No. 9 | M1 | Comparative Example 02 | × | × | × | × |
| No. 10 | M1 | Comparative Example 03 | ⊚ | × | ⊚ | × |
| No. 11 | M1 | Comparative Example 04 | × | × | × | × |
| No. 12 | M1 | Comparative Example 05 | ○ | × | ○ | × |

## Claims

1. A metal surface treatment agent, comprising:
a copolymer (A) obtained by polymerizing a compound (a) represented by the following Formula (1) with a compound (b) represented by the following Formula (2) or (3); and
a water-soluble or water-dispersible resin (B),
wherein
a polymerization ratio [a_{M}:b_{M}] between the molar amount (a_{M}) of the compound (a) and the molar amount (b_{M}) of the compound (b) is in a range of 90:10 to 20:80,
the copolymer (A) has a weight-average molecular weight of 50,000 or higher, and
the resin (B) is one or more selected from urethane resins, polyvinyl alcohol resins, polyamide resins, epoxy resins, phenolic resins, and polyvinylpyrrolidone resins: 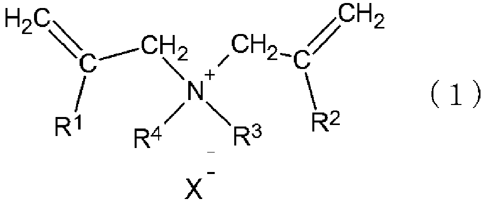 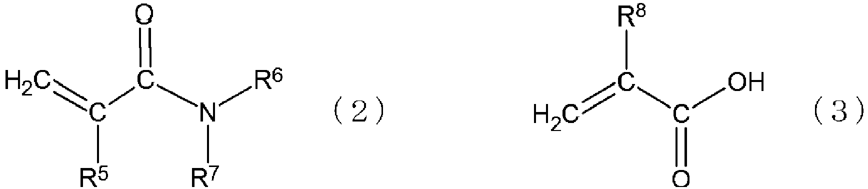
in Formula (1), R¹ and R² each independently represent a hydrogen atom or an alkyl group having 1 to 4 carbon atoms, R³ and R⁴ each independently represent an alkyl group having 1 to 5 carbon atoms, and X⁻ represents an ion of a halogen atom, or an acid anion;
in Formula (2), R⁵ represents a hydrogen atom or a methyl group, R⁶ and R⁷ each independently represent a hydrogen atom, an alkyl group having 1 to 4 carbon atoms, a benzyl group, or a hydroxyalkyl group having 2 or 3 carbon atoms; and
in Formula (3), R⁸ represents a hydrogen atom or a methyl group.

2. The metal surface treatment agent according to claim 1, wherein a ratio [Aw/Bw] between the mass (A_{W}) of the copolymer (A) and the mass (B_{W}) of the resin (B) is in a range of 0.05 to 1.0.

3. The metal surface treatment agent according to claim 1 or claim 2, further comprising a crosslinking component (C).

4. The metal surface treatment agent according to claim 3, wherein the crosslinking component (C) is a carboxyl group-containing compound (excluding the copolymer (A)) and/or a water-soluble metal compound.

5. The metal surface treatment agent according to claim 3 or 4, wherein a ratio [C_{W}/(A_{W} + B_{W})] between the mass (Cw) of the crosslinking component (C) and a total of the mass (A_{W}) and the mass (B_{W}) is in a range of 0.03 to 0.43.

6. A method of producing a metal material comprising a film, the method comprising the steps of:
contacting the metal surface treatment agent according to any one of claims 1 to 5 on or over a surface of a metal material; and
drying the metal surface treatment agent thus contacted.

7. A metal material comprising a film, which is obtained or obtainable by the method according to claim 6.

## Patentansprüche

1. Mittel zur Behandlung von Metalloberflächen, umfassend:
ein Copolymer (A), erhalten durch Polymerisation einer Verbindung (a), dargestellt durch die folgende Formel (1), mit einer Verbindung (b), dargestellt durch die folgende Formel (2) oder (3); und
ein wasserlösliches oder wasserdispergierbares Harz (B), wobei
ein Polymerisationsverhältnis [a_{M}:b_{M}] zwischen der molaren Menge (a_{M}) der Verbindung (a) und der molaren Menge (b_{M}) der Verbindung (b) in einem Bereich von 90:10 bis 20:80 liegt,
das Copolymer (A) ein gewichtsmittleres Molekulargewicht von 50.000 oder mehr hat und
das Harz (B) eines oder mehrere ist, ausgewählt aus Urethanharzen, Polyvinylalkoholharzen, Polyamidharzen, Epoxidharzen, Phenolharzen und Polyvinylpyrrolidonharzen: 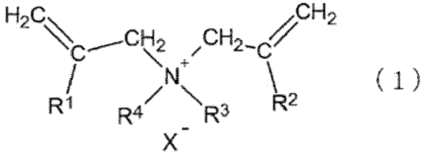 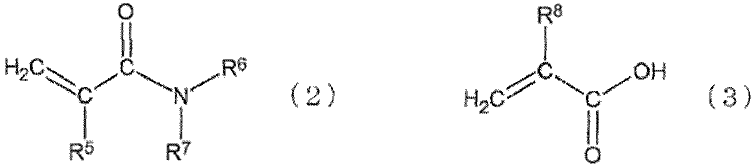
Formel (1), R¹ und R² stellen jeweils unabhängig voneinander ein Wasserstoffatom oder eine Alkylgruppe mit 1 bis 4 Kohlenstoffatomen dar, R³ und R⁴ stellen jeweils unabhängig voneinander eine Alkylgruppe mit 1 bis 5 Kohlenstoffatomen dar, und X' stellt ein Ion eines Halogenatoms oder ein Säureanion dar;
in Formel (2) stellt R⁵ ein Wasserstoffatom oder eine Methylgruppe dar, R⁶ und R⁷ stellen jeweils unabhängig voneinander ein Wasserstoffatom, eine Alkylgruppe mit 1 bis 4 Kohlenstoffatomen, eine Benzylgruppe oder eine Hydroxyalkylgruppe mit 2 oder 3 Kohlenstoffatomen dar; und
in Formel (3) bedeutet R⁸ ein Wasserstoffatom oder eine Methylgruppe.

2. Mittel zur Behandlung von Metalloberflächen nach Anspruch 1, wobei das Verhältnis [Aw/Bw] zwischen der Masse (Aw) des Copolymers (A) und der Masse (Bw) des Harzes (B) in einem Bereich von 0,05 bis 1,0 liegt.

3. Mittel zur Behandlung von Metalloberflächen nach Anspruch 1 oder Anspruch 2, das ferner eine Vernetzungskomponente (C) enthält.

4. Mittel zur Behandlung von Metalloberflächen nach Anspruch 3, wobei die Vernetzungskomponente (C) eine carboxylgruppenhaltige Verbindung (mit Ausnahme des Copolymers (A)) und/oder eine wasserlösliche Metallverbindung ist.

5. Mittel zur Behandlung von Metalloberflächen nach Anspruch 3 oder 4, wobei ein Verhältnis [Cw/(Aw + Bw)] zwischen der Masse (Cw) der Vernetzungskomponente (C) und der Summe aus der Masse (Aw) und der Masse (Bw) im Bereich von 0,03 bis 0,43 liegt.

6. Verfahren zur Herstellung eines Metallmaterials, das einen Film umfasst, wobei das Verfahren die folgenden Schritte umfasst:
Inkontaktbringen des Mittels zur Behandlung von Metalloberflächen nach einem der Ansprüche 1 bis 5 auf oder über einer Oberfläche eines Metallmaterials; und
Trocknen des so in Kontakt gebrachten Mittels zur Behandlung von Metalloberflächen.

7. Metallisches Material, umfassend einen Film, der durch das Verfahren nach Anspruch 6 erhalten oder erhältlich ist.

## Revendications

1. Agent de traitement de surface métallique comprenant :
un copolymère (A) obtenu par polymérisation d'un composé (a) représenté par la formule (1) suivante avec un composé (b) représenté par la formule (2) ou (3) suivante ; et
une résine soluble dans l'eau ou dispersible dans l'eau (B),
dans lequel
un rapport de polymérisation [a_{M}:b_{M}] entre la quantité molaire (a_{M}) du composé (a) et la quantité molaire (b_{M}) du composé (b) se situe dans une plage de 90:10 à 20:80,
le copolymère (A) a un poids moléculaire moyen en poids de 50000 ou plus, et la résine (B) est un ou plusieurs éléments sélectionnés parmi des résines uréthanes, des résines d'alcool polyvinylique, des résines de polyamide, des résines époxy, des résines phénoliques et des résines de polyvinylpyrrolidone : 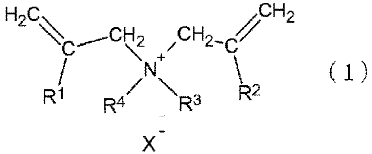 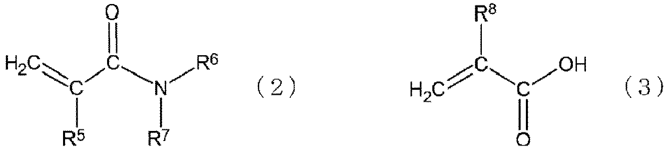
dans la formule (1), R¹ et R² représentent chacun indépendamment un atome d'hydrogène ou un groupe alkyle ayant 1 à 4 atomes de carbone, R³ et R⁴ représentent chacun indépendamment un groupe alkyle ayant 1 à 5 atomes de carbone, et X- représente un ion d'un atome d'halogène ou un anion d'acide ;
dans la formule (2), R⁵ représente un atome d'hydrogène ou un groupe méthyle, R⁶ et R⁷ représentent chacun indépendamment un atome d'hydrogène, un groupe alkyle ayant 1 à 4 atomes de carbone, un groupe benzyle, ou un groupe hydroxyalkyle ayant 2 ou 3 atomes de carbone ; et
dans la formule (3), R⁸ représente un atome d'hydrogène ou un groupe méthyle.

2. Agent de traitement de surface métallique selon la revendication 1, dans lequel un rapport [A_{W}/B_{W}] entre la masse (A_{W}) du copolymère (A) et la masse (B_{W}) de la résine (B) se situe dans une plage de 0,05 à 1,0.

3. Agent de traitement de surface métallique selon la revendication 1 ou la revendication 2, comprenant en outre un composant de réticulation (C).

4. Agent de traitement de surface métallique selon la revendication 3, dans lequel le composant de réticulation (C) est un composé contenant un groupe carboxyle (à l'exception du copolymère (A)) et/ou un composé métallique soluble dans l'eau.

5. Agent de traitement de surface métallique selon la revendication 3 ou 4, dans lequel un rapport [C_{W}/(A_{W} + B_{W})] entre la masse (Cw) du composant de réticulation (C) et un total de la masse (A_{W}) et de la masse (B_{W}) se situe dans une plage de 0,03 à 0,43.

6. Procédé de production d'un matériau métallique comprenant un film, le procédé comprenant les étapes consistant à :
mettre en contact l'agent de traitement de surface métallique selon l'une des revendications 1 à 5 avec un matériau métallique ou une surface de celui-ci ; et
sécher l'agent de traitement de surface métallique ainsi mis en contact.

7. Matériau métallique comprenant un film, qui est obtenu ou peut être obtenu par le procédé selon la revendication 6.
